# EUROPÄISCHE PATENTSCHRIFT

(11) **EP 3 314 214 B1**
(45) Veröffentlichungstag und Bekanntmachung des Hinweises auf die Patenterteilung: **26.07.2023**
(21) Anmeldenummer: 16729189.7
(22) Anmeldetag: 02.06.2016
(51) Int. Cl.: G01F 1/66, G01F 1/667, G01F 5/00, G01F 15/00, G01F 1/58, G01F 7/00, G01F 15/12, G01F 15/18

(54) **DURCHFLUSSZÄHLER MIT MESSKANAL UND NEBENKANÄLEN**
FLOWMETER WITH MEASURING FLOW CHANNEL AND AUXILIARY FLOW CHANNELS
DÉBITMÈTRE COMPRENANT UN CANAL DE MESURE ET DES CANAUX AUXILIAIRES

(30) Priorität: 24.06.2015 DE 102015008146
(43) Veröffentlichungstag der Anmeldung: 02.05.2018
(73) Patentinhaber: Diehl Metering GmbH, 91522 Ansbach (DE)
(72) Erfinder: SONNENBERG, Hans-Michael, 91522 Ansbach (DE)
(74) Vertreter: Diehl Patentabteilung
(86) Internationale Anmeldenummer: PCT/EP2016/000907
(87) Internationale Veröffentlichungsnummer: WO 2016/206773

(56) Entgegenhaltungen:
- WO-A1-2005/005932
- WO-A1-2014/057673
- DE-A1-102008 049 891
- DE-A1-102013 009 347
- US-A1- 2014 230 568

## Beschreibung

Die vorliegende Erfindung betrifft einen Durchflusszähler zur Durchflussmessung von strömenden Fluiden gemäß den Merkmalen des Oberbegriffs des Anspruchs 1.

### Druckschriftlicher Stand der Technik

Aus der WO 2014/057673 A1 ist ein Durchflusszähler gemäß dem Oberbegriff des Anspruchs 1 bekannt. Dieser bekannte Durchflusszähler weist eine Mehrzahl parallel verlaufender Kanäle mit jeweils identischem Querschnitt auf, von denen einer mit einer als Messkanal ausgebildet ist.

Die WO 2005/005932 A1 beschreibt einen Durchflusszähler, welcher ebenfalls eine Mehrzahl parallel verlaufender Kanäle mit jeweils identischem Querschnitt aufweist, von denen einer mit einer als Messkanal ausgebildet ist. Zudem umfasst dieser Fluidzähler einen über den gesamten Querschnitt verlaufenden Strömungsgleichrichter am Einlauf der einzelnen Kanäle, der die Fließgeschwindigkeit des Fluids über den Gesamtquerschnitt gleichrichten soll.

Der aus der DE 10 2013 009 347 A1 bekannte Durchflusszähler weist ebenfalls eine Mehrzahl parallel verlaufender Kanäle mit jeweils identischem Querschnitt auf, von denen lediglich einer mit einer als Messkanal ausgebildet ist.

Die DE 10 2008 049 891 A1 beschreibt einen Strömungsrichter für ein Ultraschall-Durchflussgerät, bei dem mehrere parallel zur Hauptströmungsrichtung orientierte Stege einlaufseitig das fluidführende Strömungsrohr in mehrere Teilquerschnitte unterteilen, wobei zumindest ein Teil der Strömungsquerschnitte unterschiedlich groß ist. Der Strömungsrichter wird am Eingang des Ultraschall-Durchflussgeräts vor dem Messrohr, welches den einzigen Messkanal bildet, in das Anschlussgehäuse eingesetzt. Ziel dieser Maßnahme ist es, das sich ein laminares Strömungsprofil nach dem Durchlauf durch den Strömungsrichter auflöst.

Bei dem aus der US 2014/0230568 bekannten Ultraschall-Durchflusszähler wird mittels einer Trennplatte der Strömungsquerschnitt in einen Messkanal mit geringerem Querschnitt und einen Nichtmesskanal mit einem im Vergleich dazu größerem Querschnitt aufgetrennt.

Ein in der DE 41 27 695 A1 beschriebener induktiver Durchflussmesser umfasst ein wenigstens annähernd horizontal verlaufendes Messrohr, das im Wesentlichen parallel zu einem Durchmesser von einem Magnetfeld zu durchsetzen ist. Das Messrohr weist in seiner Wandung beidseitig des Durchmessers wenigstens je eine Messelektrode auf. In einem Bodenbereich des Messrohrs befindet sich eine annähernd symmetrisch zu dem Durchmesser verlaufende Rinne, in deren Wänden wenigstens je eine zusätzliche Messelektrode vorgesehen ist. Während bei größeren Messstoff-Volumina der Messstoff hauptsächlich durch das Messrohr strömt, strömen sehr kleine Messstoff-Volumina mit einer erhöhten Fließgeschwindigkeit durch die Rinne. Auf diese Weise ist eine besonders genaue Messung des Messstoff-Volumens auch dann möglich, wenn das Messstoff-Volumen sehr klein ist.

Aus der DE 10 2007 045 101 A1 sowie der hierzu als Zusatzanmeldung eingereichten DE 10 2009 006 733 A1 ist ein Durchflusszähler bekannt, bei welchem zwei voneinander getrennte Messstrecken vorgesehen sind, und wobei der Fluidzulauf durchflussmengen- oder fließgeschwindigkeitsabhängig einmal der ersten oder der zweiten Messstrecke zugeführt wird und ein andermal der ersten und der zweiten Messstrecke zugeführt wird. Die Zuführung des Fluidzulaufs erfolgt in einer Ausführungsform durch Ansteuerung unter Einsatz einer Umschalteinrichtung, wie zum Beispiel eines Umschaltventils. In einer anderen Ausführungsform erfolgt die Zuführung fluiddynamisch, d.h. aufgrund der Kraft oder des Drucks des Fluids im Fluidzulauf. So kann etwa das Fluid abhängig von der Durchflussmenge ohne Ansteuerung von Umschaltmittelmengen schwerkraftbedingt zunächst in die zweite Messstrecke fließen und bei erhöhtem Durchfluss in die zweite und erste Messstrecke fließen.

### Aufgabe der vorliegenden Erfindung

Die Aufgabe der vorliegenden Erfindung besteht darin, einen neuartigen Durchflusszähler zur Verfügung zu stellen, der bei einfachem und kompaktem Aufbau über eine besonders hohe Messdynamik verfügt, d.h. in einem besonders großen Bereich von sehr niedrigen Fließgeschwindigkeiten bis zu sehr hohen Fließgeschwindigkeiten zuverlässig die Durchflussmenge des Fluids pro Zeit ermittelt.

### Lösung der Aufgabe

Die vorstehende Aufgabe wird durch einen Durchflusszähler mit den Merkmalen des Anspruchs 1 gelöst. Zweckmäßige Ausgestaltungen des erfindungsgemäßen Durchflusszählers werden in den abhängigen Ansprüchen beansprucht.

Dadurch, dass bei einer höheren Gesamtdurchflussmenge des Fluids pro Zeit ein niedrigerer Anteil des Fluids durch den Hauptkanal fließt als bei einer niedrigen Gesamtdurchflussmenge des Fluids pro Zeit, zugleich aber der Hauptkanal und Nebenkanäle durchströmt sind, insbesondere über den vollständigen Querschnitt durchströmt sind, genügt eine einzige Messeinrichtung, die (Signal-) Einkopplungseinrichtung und (Signal-)Erfassungseinrichtung, die ausschließlich die Fließgeschwindigkeit des Fluids im Hauptkanal erfasst: Die Beziehung zwischen der Fließgeschwindigkeit im Hauptkanal und der Durchflussmenge an Fluid pro Zeit ist nicht proportional, sondern unterproportional. Auf diese Weise kann eine erhöhte Messdynamik erreicht werden, ohne dass dafür mehrere Messeinrichtungen bereitgestellt werden müssten.

Erfindungsgemäß sind zumindest zwei Nebenkanäle vorgesehen, die einen kleineren Querschnitt haben als der Hauptkanal. Durch die kleineren Querschnitte der Nebenkanäle ergibt sich eine strömungsmechanische Verschiebung der Fluidmenge, die nun abhängig von der Gesamtfluidmenge ist.

Bevorzugt sind die Nebenkanäle um den Hauptkanal herum angeordnet, zum Beispiel in einer Anzahl von vier bis zwölf.

Als zweckmäßig hat sich erwiesen, wenn das Verhältnis der Summe der Querschnitte aller Nebenkanäle zu dem Querschnitt des Hauptkanals zwischen 20 : 80 und 80 : 20, bevorzugt zwischen 30 : 70 und 70 : 30, besonders bevorzugt zwischen 40 : 60 und 60 : 40, ganz besonders bevorzugt zwischen 45 : 55 und 55 : 45 beträgt, und im höchsten Maße bevorzugt ist es, wenn das Verhältnis im Wesentlichen 50 : 50 (1 : 1) beträgt.

Auf diese Weise lässt sich die mittlere Reynolds-Zahl in Hauptkanal und Nebenkanälen um einen Faktor von größer als 2, zum Beispiel von zwischen 3 und 5, insbesondere 4, steigern im Vergleich zu der Situation mit einem einzigen Kanal, der den gleichen Gesamtquerschnitt aufweist.

Durch geeignete Auswahl von Form und Größe der Nebenkanäle (insbesondere hinsichtlich der jeweils kleinsten Abmessung im Querschnitt), ihrer Innenoberfläche und ihrer Anordnung relativ zueinander und zum Hauptkanal lässt sich dafür sorgen, dass bei einer vorbestimmten Durchflussmenge des Fluids pro Zeit in den Nebenkanälen der Fluidstrom von einem laminaren Strom zu einem turbulenten Strom übergeht, sodass aufgrund der Turbulenz bei höherer Fließgeschwindigkeit des Fluids in der Anordnung vergleichsweise mehr Fluid durch den Nebenkanal strömt. So ist es etwa vorteilhaft, wenn der Durchmesser des Hauptkanals zu einem in radialer Richtung gemessenen Durchmesser eines Nebenkanals (bzw. einem kleinsten Wandabstand bei einem spaltförmigen Nebenkanal) im Verhältnis von zwischen 2,5 und 6, bevorzugt von zwischen 4 und 5 steht.

Mit besonderem Vorteil ist zumindest ein erster Teil der Nebenkanäle durch eine Wandung von dem Hauptkanal getrennt. Auf diese Weise lässt sich überhaupt die Geometrie des Nebenkanals geeignet und im Wesentlichen unabhängig von den Eigenschaften des Hauptkanals ausgestalten.

Bei dieser Ausführungsform ist es besonders zweckmäßig, wenn die Wandung, die den ersten Teil der Nebenkanäle von dem Hauptkanal trennt, entlang der gesamten Messstrecke vorhanden ist. Hingegen ist es nicht zwingend, dass auch die Wandungen, die die Nebenkanäle des ersten Teils der Nebenkanäle voneinander trennen, entlang der gesamten Messstrecke verlaufen. Vielmehr genügt es, z.B. in einem Anfangs- und einem Endabschnitt der Messstrecke solche Wandungen zwischen den Nebenkanälen vorzusehen, in einem Zwischenbereich aber das Fluid außerhalb des Hauptkanals freier fließen zu lassen. Bei geeigneter Wahl der Länge des Anfangsabschnitts und des Endabschnitts relativ zur kleinsten Querschnittsabmessung (bzw. zum kleinsten Wandabstand) eines Nebenkanals kann die gewünschte Eigenschaft erzielt werden, dass bei höherer Fließgeschwindigkeit weniger Fluid relativ gesehen durch den Hauptkanal fließt als durch die Nebenkanäle. Insbesondere soll der oben beschriebene Übergang zwischen laminarer und turbulenter Strömung durch die Nebenkanäle innerhalb des gewünschten dynamischen Messbereichs erzielt werden.

Alternativ kann ein Teil der Nebenkanäle als sich an den Hauptkanal anschließende Vertiefung, insbesondere als sich an den Hauptkanal anschließender Radialspalt, ausgebildet sein. Es kann sich hierbei um sämtliche Nebenkanäle handeln, oder um einen von dem oben genannten ersten Teil der Nebenkanäle verschiedenen zweiten Teil der Nebenkanäle. Eine laminare Strömung wird insbesondere dann auch bei hohen Fließgeschwindigkeiten erzielt, wenn der entsprechende Kanal mehr oder weniger in allen Richtungen dieselbe Abmessung aufweist. Je weniger eine Rotationssymmetrie des jeweiligen Kanals gegeben ist, desto früher kann der Übergang von laminarer zu turbulenter Strömung erfolgen.

Vorzugsweise ist die Querschnittsform der Nebenkanäle von außen nach innen zum Hauptkanal hin erweitert, vorzugsweise im Wesentlichen trapezförmig ausgebildet. Dies hat den Vorteil, dass ein Verstopfen der Nebenkanäle verhindert wird. Vorzugsweise besitzen die Flankenflächen der Nebenkanäle einen Winkel zur Mittelachse des Nebenkanals im Bereich von 5° bis 20°, besonders vorzugsweise von 9° bis 16°. Zweckmäßigerweise ist das Breiten- zu Höhenverhältnis der Nebenkanäle zumindest im Wesentlichen 1:1. Vorzugsweise sind die Ecken in und an den Nebenkanälen abgerundet, wodurch einerseits eine verbesserte Strömungsführung, andererseits ein vereinfachtes Herstellen im Rahmen eines Spritzgussvorgangs ermöglicht werden.

Entsprechend ist in einer bevorzugten Ausführungsform vorgesehen, dass der Hauptkanal (in welchem eine turbulente Strömung über den gesamten dynamischen Messbereich erwünscht ist) in zwei vorbestimmten zueinander senkrechten Richtungen im Wesentlichen die gleiche Abmessung aufweist, wobei vorzugsweise der Hauptkanal einen kreisförmigen oder quadratischen Querschnitt aufweist. Hingegen ist zumindest ein Teil der Nebenkanäle in zwei verschiedenen Richtungen mit unterschiedlichen Abmessungen ausgebildet, wobei vorzugsweise ein Nebenkanal einen nicht-quadratischen, aber rechteckigen Querschnitt aufweist, d.h. einen rechteckigen Querschnitt, bei dem das Rechteck unterschiedliche Seitenlängen aufweist, insbesondere um einen Faktor von zwischen 1,2 bis 5, bevorzugt um einen Faktor größer als 3, verschiedene Seitenlängen. Alternativ kann ein Nebenkanal einen trapezförmigen Querschnitt aufweisen. Zumindest ein Teil der Nebenkanäle kann auch einen ringförmigen oder ringsegmentförmigen Querschnitt aufweisen. Bei einer bevorzugten Ausführungsform ist der Hauptkanal zu einer Achse des Durchflusszählers ringsymmetrisch angeordnet (also etwa von kreisförmigem Querschnitt), und die Nebenkanäle sind ringförmig um den Hauptkanal verteilt.

Der erfindungsgemäße Durchflusszähler ist in zwei Hauptausführungsformen verwirklichbar:
Er kann als Ultraschallzähler ausgebildet sein, bei dem ein Paar von Ultraschallwandlern die Funktion der (Signal-)Einkopplungseinrichtung und der (Signal-) Erfassungseinrichtung bereitstellen; jeder Ultraschallwandler trägt ein Signal in das Fluid im Hauptkanal ein und erfasst zugleich das Signal von dem jeweils anderen Ultraschallwandler.

In bekannter Weise kann hierbei ein Teil der Messstrecke durch einen Rohreinschub bereitgestellt sein, der zwei Ansätze mit jeweils einer Ultraschall reflektierenden Oberfläche aufweist, welche Ultraschall von den Wandlern in den Hauptkanal hineinlenkt. (Der Hauptkanal ist hierbei in dem Rohreinschub ausgebildet, so wie auch die Nebenkanäle.)

Bei der zweiten Ausführungsform erfolgt die Durchflussmessung über die magnetische Induktion. In diesem Falle ist die Einkoppeleinrichtung als ein Magnetfeld erzeugende elektrische Spule ausgebildet und die Erfassungseinrichtung durch eine Elektrodenanordnung bereitgestellt.

Bei für übliche Fluide (wie zum Beispiel Wasser) geeigneten Ausführungsformen haben die Nebenkanäle eine solche Größe, dass sie vor Verstopfung mit Hilfe eines Filters für Partikel geschützt werden sollten, also etwa als Sieb im Einlauf, dessen Öffnungen kleiner sind als oder gleich groß sind wie die kleinsten Querschnittsabmessungen der Nebenkanäle.

Gemäß einer vorteilhaften Ausgestaltung der vorliegenden Erfindung verlaufen die Nebenkanäle, zumindest im Wesentlichen, über die gesamte Länge des Hauptkanals bzw. über die gesamte Länge des Messrohrs. Hierdurch ergeben sich sowohl strömungstechnische als auch herstellungstechnische Vorteile.

Zweckmäßigerweise kann der Hauptkanal sowie die Nebenkanäle, bzw. das Messrohr, als einteiliges Bauteil, vorzugsweise als einteiliges Formteil, besonders vorzugsweise als einteiliges Spritzgussteil ausgebildet sein. Das gesamte Messrohr kann somit in einem einzigen Spritzgussvorgang hergestellt werden.

Vorteilhaft ist es, wenn das Bauteil bezüglich seiner Außenseite (vorzugsweise auch bezüglich seiner Innenseite) in seiner Längsrichtung konisch geformt ist. Vorzugsweise ist hierbei ein Winkel in Bezug auf die Mittellängsachse von 0,3° bis 1,2° vorgesehen.

Dadurch, dass die Entformungsebene vorzugsweise mittig durch zwei gegenüberliegende Nebenkanäle verläuft, kann das Messrohr ohne große Materialanhäufungen im Außenbereich zwischen den Nebenkanälen hergestellt werden.

Vorzugsweise sind entlang des Umfangs des Messrohrs Nebenkanäle in einer geraden Anzahl vorgesehen, vorzugsweise vier, sechs oder acht Nebenkanäle. Hierdurch können im Wesentlichen gleichmäßige Wandstärken geschaffen werden, was für den Spritzgussprozess vorteilhaft ist.

Dadurch, dass der Durchflusszähler ein Gehäuse mit einer Innenwand aufweist und sich in einem Bereich zwischen der Innenwand des Gehäuses und einer Außenwand des den Hauptkanal sowie die Nebenkanäle umfassenden Messrohrs Fluid befindet, werden in vorteilhafter Weise akustische Reflexionen bei der Anwendung von Ultraschallmesstechnik vermieden.

Vorzugsweise ist hierbei an der Rückseite des Messrohrs ein umlaufender kragenartiger Vorsprung für die Gewährleistung eines Anschlusses des Messrohrs an das Gehäuse vorgesehen. Insbesondere wird hierdurch eine Abdichtung des Messrohrs zum Gehäuse hin bei gleichzeitiger Beabstandung zur Bildung des Zwischenbereichs ermöglicht. Hierbei kann sich der Vorsprung in einem Bereich entlang der Längsachse des Messrohrs befinden. Im Bereich des Einlaufs und/oder Auslaufs des Messrohrs können zusätzlich rippenartige Vorsprünge vorgesehen sein, die das Messrohr zum Gehäuse hin fixieren, dazwischen allerdings das Einströmen von Fluid ermöglichen.

Gemäß einer zweckmäßigen Ausgestaltung der vorliegenden Erfindung ist das Messrohr von einem Messrohrhalter umgeben, wobei der Messrohrhalter mindestens zwei Längsschalen aufweist, die das Messrohr und/oder die Reflektoren fixieren. Dies ermöglicht es, das Messrohr zusammen mit dem Messrohrhalter als einfach (auch automatisiert) handzuhabende Montageeinheit in das Gehäuse stirnseitig einzuschieben.

Vorzugsweise umfasst der Messrohrhalter mindestens einen, vorzugsweise eine Mehrzahl von Stege, der bzw. die so angeordnet ist bzw. sind, dass der oder die Stege keinen der Nebenkanäle strömungstechnisch verdecken.

### Beschreibung der Erfindung anhand von Ausführungsbeispielen

Die Erfindung ist anhand von vorteilhaften Ausführungsbeispielen gemäß den Zeichnungsfiguren näher erläutert. Diese zeigen:
- Fig. 1a: eine perspektivische Darstellung mit teilweise offenem Außenrohr eines Ultraschallzählers als Beispiel eines erfindungsgemäßen Durchflusszählers gemäß einer ersten Ausführungsform;
- Fig. 1b: eine Schnittansicht des Ultraschallzählers aus Fig. 1a mit Bezeichnungen für einige der relevanten Abmessungen;
- Fig. 2: eine bei dem Ultraschallzähler aus Fig. 1 alternativ einsetzbare Anordnung aus Hauptkanal und vier Nebenkanälen;
- Fig. 3: eine bei dem Ultraschallzähler aus Fig. 1 ebenfalls alternativ einsetzbare Anordnung aus einem Hauptkanal mit acht sich als Radialspalte daran anschließenden Nebenkanälen;
- Fig. 4: eine bei dem Ultraschallzähler aus Fig. 1 ebenfalls alternativ einsetzbare Anordnung aus einem Hauptkanal und sechs daran als Radialspalt sich anschließenden Nebenkanälen sowie sechs weiteren Nebenkanälen mit Trennwand zum Hauptkanal;
- Fig. 5: eine Seitenansicht eines bei dem erfindungsgemäßen Ultraschallzähler wie in Fig. 1 vorsehbaren Einsatzes;
- Fig. 6: den Einsatz aus Fig. 5 im Schnitt VI-VI;
- Fig. 7: den Einsatz aus Fig. 5 in Draufsicht;
- Fig. 8: den Einsatz aus Fig. 5 in Vorderansicht;
- Fig. 9: den Einsatz aus Fig. 5 im Schnitt IX-IX aus Fig. 7;
- Fig. 10: eine Abwandlung des Zählers aus Fig. 1a als magnetischer Induktionsmesser;
- Fig. 11: ein Messrohr gemäß einer weiteren Ausgestaltung der vorliegenden Erfindung in Seitenansicht (Fig. 11a) sowie in Schnittansicht (Fig. 11b) in Blickrichtung A-A aus Fig. 11a sowie in perspektivischer Darstellung (Fig. 11c);
- Fig. 12: eine stark vereinfachte schematische Querschnittsdarstellung des Messrohrs gemäß Fig. 11 im in das Gehäuse eingesetzten Zustand;
- Fig. 13: eine weitere Ausgestaltung, bei der das Messrohr gemäß Fig. 11 in einem zweiteiligen Messrohrhalter untergebracht ist, in perspektivischer Darstellung (Fig. 13a) sowie in Vorderansicht (Fig. 13b);
- Fig. 14: eine Strömungssimulation in einer Schnittdarstellung durch das Messrohr bei geringem Durchfluss (Fig. 14a) sowie bei höherem Durchfluss (Fig. 14b); sowie
- Fig. 15: eine Darstellung des Quotienten aus Laufzeitdifferenz/Durchfluss gegenüber dem Durchfluss bei einem erfindungsgemäßen Messrohr im Vergleich zu einem herkömmlichen Messrohr mit kreisrundem Durchmesser.

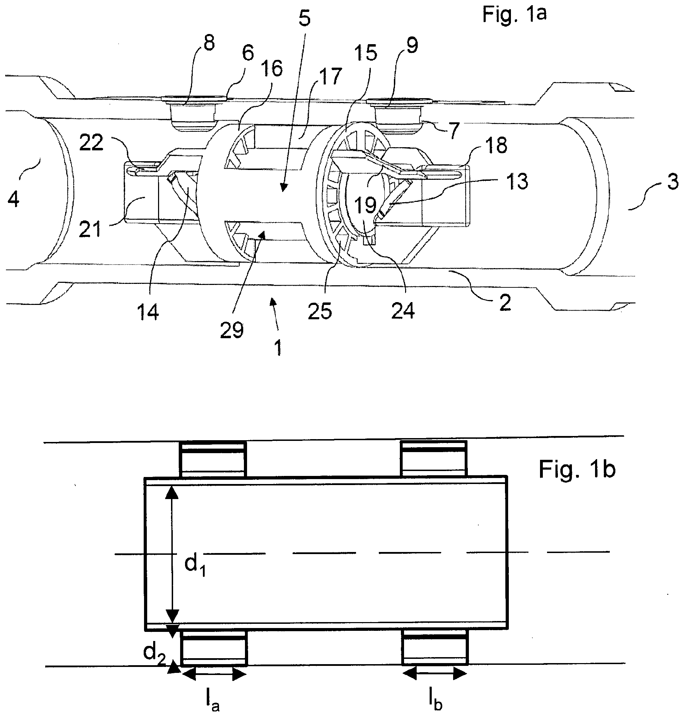

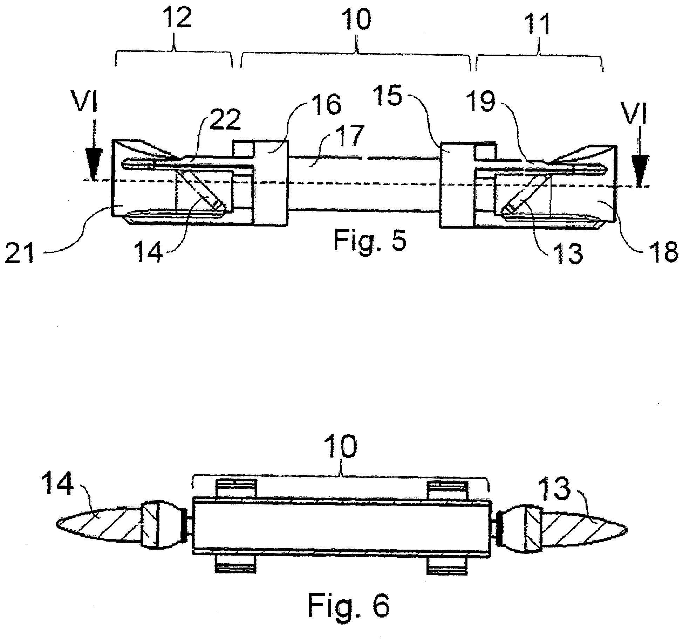

Bezugsziffer 1 bezeichnet den hier als Ausführungsform des erfindungsgemäßen Durchflusszählers beschriebenen Ultraschallzähler in seiner Gesamtheit. Der Ultraschallzähler dient der Bestimmung der Durchflussmenge eines strömenden Mediums, insbesondere einer Flüssigkeit oder eines Gases. Wie in Fig. 1 dargestellt, umfasst der Ultraschallzähler 1 ein üblicherweise aus Metall bestehendes Gehäuse 2 mit einem Einlass 3 sowie einem Auslass 4, welche jeweils mit einem nicht dargestellten Rohrleitungssystem verbunden werden. In dem Gehäuse 2 ist ein Messeinsatz 5 angeordnet. In Öffnungen 6 und 7 des Gehäuses 2 ist jeweils ein Ultraschallwandler 8, 9 angeordnet. Wie aus den Fig. 5 bis 7 ersichtlich, umfasst der Messeinsatz 5 ein Messrohr 10 mit zwei Ansätzen 11 und 12 auf der Fluideingangsseite und der Fluidausgangsseite des Messrohrs 10. An dem Ansatz 11 ist eine reflektierende Ebene 13 vorgesehen, am Ansatz 12 eine reflektierende Ebene 14.

Die Ultraschallwandler 8, 9 bilden zusammen mit den reflektierenden Ebenen 13, 14 eine U-förmige Messstrecke.

Die Messung der Durchflussmenge erfolgt zum Beispiel nach dem sogenannten Differenzlaufzeitverfahren. Hierzu werden von den Ultraschallwandlern 8, 9 jeweils im Wechsel Ultraschallsignale ausgesendet und empfangen, die Laufzeitdifferenz festgestellt und daraus die Fließgeschwindigkeit des strömenden Mediums und abhängig davon das Durchflussvolumen ermittelt.

Vorliegend geht es darum, das Durchflussvolumen, also die Durchflussmenge, pro Zeit über einen möglichst großen Wertebereich, nämlich über mehrere Größenordnungen des Wertes, hinweg zu ermitteln.

In herkömmlichen Ultraschallzählern ist ein einziger Kanal für das Fluid vorgesehen, wobei üblicherweise eine turbulente Strömung über den Wertebereich vorhanden ist. Auf diese Weise ist das Durchflussvolumen pro Stunde im Messbereich proportional zur (mittleren) Strömungsgeschwindigkeit. Je größer daher der gewünschte Messbereich für das Durchflussvolumen pro Zeit ist, desto empfindlicher muss die Strömungsgeschwindigkeit gemessen werden.

Der Ultraschallzähler 1 gemäß Fig. 1 weist nun die Eigenschaft auf, dass das Durchflussvolumen pro Zeit bzw. die Durchflussmenge pro Zeit nicht mehr proportional zur Fließgeschwindigkeit des Fluids wie bei einem einzigen Kanal ist, sondern ein kleinerer Bereich von Fließgeschwindigkeiten denselben Bereich von Durchflussvolumina pro Zeit erfassen kann. Vorliegend geschieht dies dadurch, dass die Messung zwar bezüglich des einen Hauptkanal 24 durchströmenden Fluids erfolgt. Das Fluid kann aber zudem auch durch Nebenkanäle 25 fließen, in denen sich das Fluid in Abhängigkeit von dem zu erfassenden Durchflussvolumen pro Zeit unterschiedlich verhält.

Im Einzelnen sind ein Hauptkanal 24 und Nebenkanäle 25 in einem Anfangsabschnitt 15 des Messrohrs (mit einem Absatz zur Fixierung des Messeinsatzes) und auch in einem Endabschnitt 16 des Messrohrs ausgebildet. Dazwischen befindet sich ein Zwischenbereich 17, in dem das Fluid aus mehreren Nebenkanälen 25 des Anfangsabschnitts 15 zusammengeführt wird, bevor es durch die Nebenkanäle 25 des Endabschnitts 16 wieder getrennt wird. Die Längen lₐ, l_{b} sind im Verhältnis zum Durchmesser d₂ der Nebenkanäle 25 so gewählt, dass eine laminare Strömung in den Nebenkanälen gefördert wird.

Für eine gute Verteilung des Fluids sorgen ein zentrales Verteilerschwert 18, auf dem die reflektierende Ebene 13 ausgebildet ist, sowie Seitenflügel 19 und 20 am Ansatz 11. Dem entsprechen ein Schwert 21 und Flügel 22, 23 am Ansatz 12.

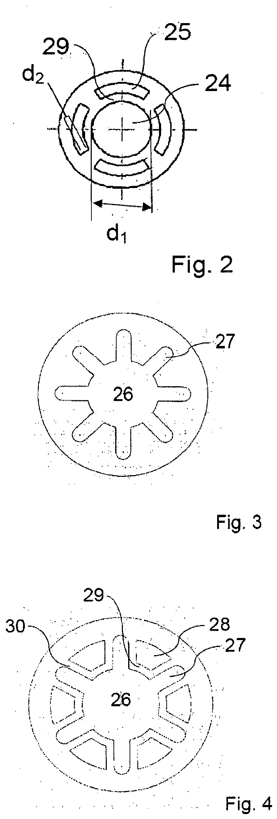

Anhand der Fig. 2, bei der im Wesentlichen dasselbe Prinzip verwirklicht ist wie in Fig. 1, nur mit weniger Nebenkanälen, wird die Erfindung nachfolgend weiter im Detail erläutert.

Gemäß Fig. 1b oder 2 ist ein Hauptkanal 24 vorgesehen, der beispielsweise einen Innenrohrdurchmesser d₁ von 11,5 mm aufweist. Es sind vier Nebenkanäle 25 vorgesehen, die gemeinsam einen Ringspalt mit vier Segmenten bilden, wobei die Segmente zusammen 270° eines Vollkreises bereitstellen. Die Segmente haben eine radiale Abmessung d₂ von 2,1 mm. Bevorzugt beträgt das Verhältnis von d₁ zu d₂ zwischen 2,5 und 6, besonders bevorzugt 3,5 oder 4 bis 5.

Der Hauptkanal 24 hat somit eine Querschnittsfläche von fast 104 mm² und die vier Nebenkanäle 25 haben gemeinsam eine Querschnittsfläche von ca. 84 mm². Die Nebenkanäle 25 zusammen weisen daher fast 80 % der Querschnittsfläche des Hauptkanals 24 auf. Jeder Nebenkanal 25 für sich hat eine im Vergleich zum Hauptkanal 24 vergleichsweise kleine Querschnittsfläche.

Durch die Form der Nebenkanäle 25 und die in Fig. 1b ersichtlichen Längen lₐ/l_{b} mit l_{a,b}/d₂ ≥ 1,5 bis 2 bedingt, kommt es dort erst bei mittleren Durchflussvolumina pro Zeit zu einer turbulenten Strömung. Bei niedrigen Durchflussvolumina pro Zeit ist eine laminare Strömung gebildet. Im Hauptkanal 24 gibt es quasi bei sämtlichen Durchflussvolumina pro Zeit des Messbereichs eine turbulente Strömung (nur bei sehr geringen Strömungsgeschwindigkeiten kann auch die Strömung im Hauptkanal 24 laminar sein).

Bei einer laminaren Strömung ist das jeweilige Durchflussvolumen vom Durchmesser in der vierten Potenz abhängig. Bei einer turbulenten Strömung ist das Durchflussvolumen pro Zeit von der zweiten Potenz des Durchmessers, im Wesentlichen also vom Querschnitt abhängig. Das heißt, dass die Durchflussmenge bei laminarer Strömung deutlich stärker vom Durchmesser des Strömungskanals abhängt als bei turbulenter Strömung. Mithin verringert sich die Durchflussmenge einer laminaren Strömung bei Halbierung des Kanaldurchmessers auf ein Sechzehntel, während sie bei turbulenter Strömung lediglich auf ein Viertel sinkt. Die Fließgeschwindigkeit (der Quotient aus Durchflussvolumen pro Zeit und Strömungsquerschnitt) ist dementsprechend bei turbulenter Strömung unabhängig vom Kanaldurchmesser, während er bei laminarer Strömung vom Quadrat des Durchmessers abhängt.

Durch den Übergang im Nebenkanal 25 von laminarer zu turbulenter Strömung bei Erhöhung des Gesamtdurchflussvolumens pro Zeit verschiebt sich die Verteilung des Gesamtdurchflussvolumens pro Zeit (das einer bestimmten Durchflussmenge pro Zeit entspricht) vom Hauptkanal 24 auf die Nebenkanäle 25. Bei sehr niedrigen Gesamtdurchflussvolumina pro Zeit von etwa 5 l/h beträgt die mittlere Fließgeschwindigkeit des Fluids in den Nebenkanälen 25 nur 15 % der mittleren Fließgeschwindigkeit des Fluids im Hauptkanal 24. Mit anderen Worten ist dafür gesorgt, dass vergleichsweise viel Fluid durch den Hauptkanal strömt, wenn das Gesamtdurchflussvolumen pro Zeit insgesamt gering ist. Dies ist erwünscht, da auf diese Weise die Messung bei niedrigen Gesamtdurchflussvolumina pro Zeit erleichtert ist. Bei Einsetzen der turbulenten Strömung verschwinden die Unterschiede zwischen Hauptkanal 24 und Nebenkanälen 25, was die mittlere Geschwindigkeit des durch sie hindurch fließenden Fluids betrifft. Bei einem Gesamtdurchflussvolumen pro Zeit von 5000 l/h erreicht das Fluid in den Nebenkanälen 25 ca. 95 % der Geschwindigkeit des Fluids im Hauptkanal 24.

Der Übergang von laminar zu turbulent lässt sich an der Reynolds-Zahl festmachen. Im Beispielsfalle in Fig. 2 mit den genannten Abmessungen entwickelt sich die Reynolds-Zahl in den Nebenkanälen 25 (Spaltbreite d₂ von ca. 2 mm) von dem Wert 5 bei einem Gesamtdurchflussvolumen von 5 l/h über den Wert 60 bei einem Gesamtdurchflussvolumen von 50 l/h und den Wert 1440 bei einem Gesamtdurchflussvolumen von 500 l/h bis zu einem Wert von ca. 16000 bei einem Gesamtdurchflussvolumen von 5000 l/h. Gerade bei niedrigen Gesamtdurchflussvolumina steigt die Reynolds-Zahl überproportional.

Die Fig. 3 zeigt eine alternative Anordnung von Hauptkanal 26 und Nebenkanälen 27: Hier sind die Nebenkanäle 27 als vom Hauptkanal 26 abgehende Radialspalte ausgebildet. Im Beispielsfalle von Fig. 3 sind acht Radialspalte am Hauptkanal 26 vorgesehen. Auch in Abwesenheit einer die Nebenkanäle 27 vom Hauptkanal 26 trennenden Wandung tritt der oben beschriebene Effekt ein, bei dem zunächst in den Nebenkanälen 27 eine laminare Strömung ausgebildet ist und bei höheren Durchflussvolumina pro Zeit die Strömung auch in den Nebenkanälen 27 turbulent wird, sodass vergleichsweise mehr Fluid durch die Nebenkanäle 27 fließen kann.

Bei einer weiteren Ausführungsform der Anordnung von Hauptkanal 26 und Nebenkanälen 27, 28 gemäß Fig. 4 ist ein erster Teil der Nebenkanäle 28 durch eine Wandung 29 vom Hauptkanal 26 getrennt, und ein zweiter Teil der Nebenkanäle 27 ist als Radialspalt vorgesehen, der ohne Wandung in den Hauptkanal 26 übergeht. Die Nebenkanäle 27 und 28 sind durch Wandungen 30 voneinander getrennt.

Zusammenfassend sei darauf hingewiesen, dass bei dem hier vorgestellten Ultraschallzähler als Beispiel eines Durchflusszählers die Messung ausschließlich durch den Hauptkanal 24 bzw. 26 hindurch erfolgt. Die Nebenkanäle 25 bzw. 27 bzw. 28 haben die Aufgabe, einen Messbereich für das Durchflussvolumen pro Zeit auf einen möglichst kleinen Messbereich für die Fluidgeschwindigkeit im Hauptkanal 24 abzubilden. Durch das bloße Vorhandensein der Nebenkanäle 25, 27, 28 wird das Prinzip der reinen Proportionalität zwischen Durchflussvolumen pro Zeit und Fließgeschwindigkeit des Fluids im zur Messstrecke zugehörigen Kanal zugunsten eines höheren Messbereichs durchbrochen.

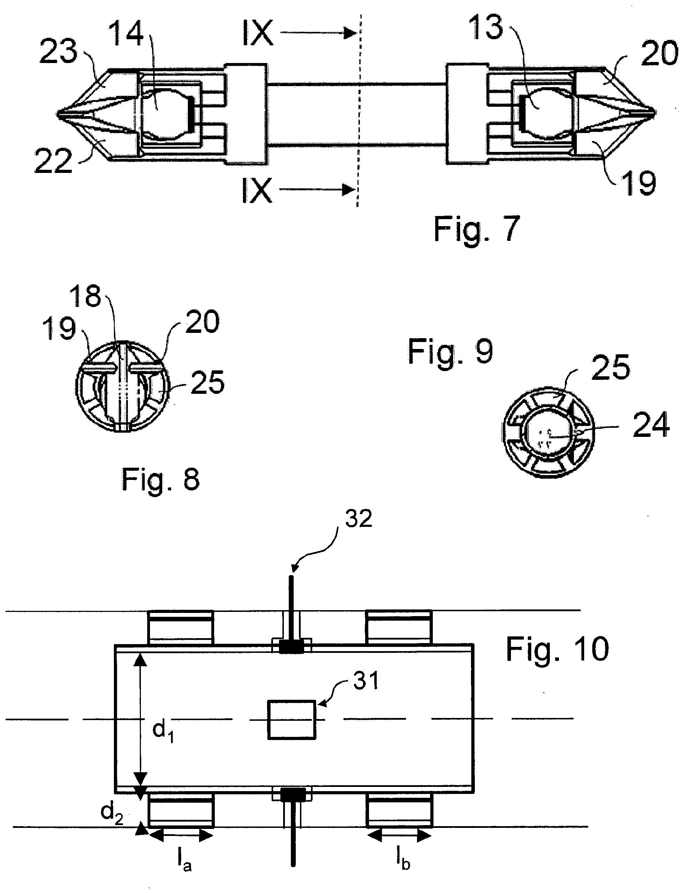

Die Erfindung ist gleichfalls anwendbar auf solche Durchflusszähler, bei denen mittels einer Spule ein zeitveränderliches magnetisches Feld eingekoppelt wird und eine dadurch induzierte magnetische Spannung an Elektroden als Signalerfassungseinrichtung als aufgrund des Messsignals entstehendes Antwortsignal erfasst wird. Hierzu zeigt die Fig. 10 eine Darstellung gemäß Fig. 1a, nur, dass an Stelle der Ultraschallwandler mittig eine Spule 31 vorgesehen ist, und wobei der Hauptkanal im Bereich seiner Wandung 29 eine Messelektrode 32 trägt.

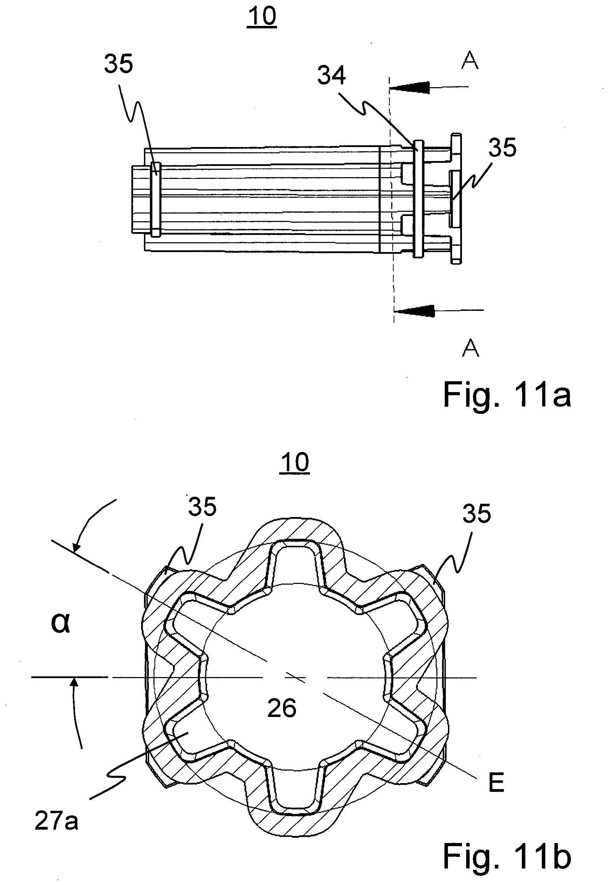

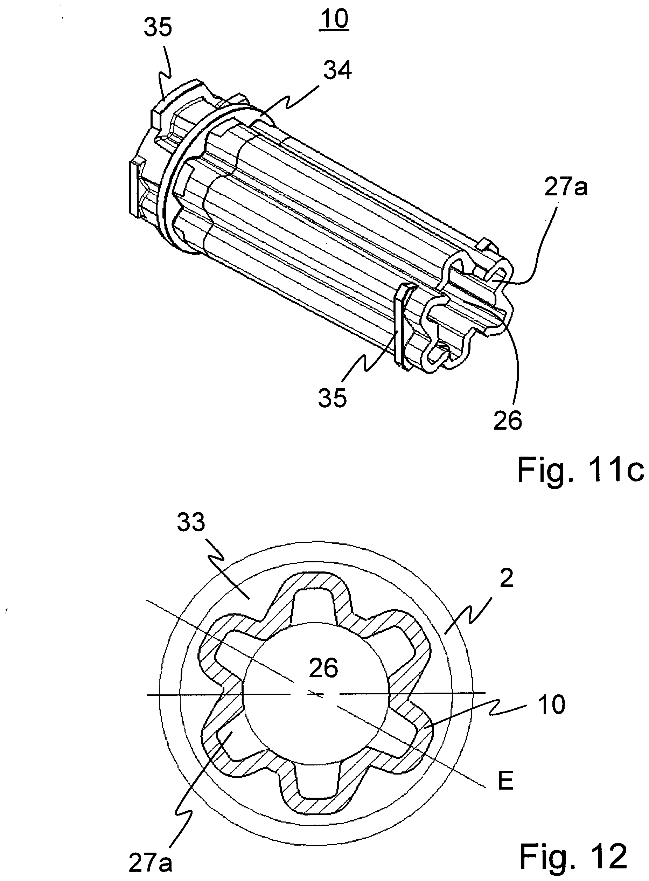

Fig. 11a zeigt eine weitere zweckmäßige Ausgestaltung eines Messrohrs 10 der vorliegenden Erfindung. Das Messrohr 10 ist vorzugsweise einteilig ausgebildet und entlang dessen Längsachse außen (und vorzugsweise auch innen) mit einer leichten Konizität versehen. Die Konizität liegt vorzugsweise im Bereich von 0,3° bis 1,2° bezogen auf die Mittellängsachse des Messrohrs 10. Das Messrohr 10 umfasst vorzugsweise einen vollumlaufenden kragenartigen Vorsprung 34 (vgl. auch Fig. 11c), welcher in der Nähe des Einlaufs angeordnet ist. Im Bereich des Auslaufs weist das Messrohr 10 auf jeder Seite einen rippenartigen Vorsprung 35 auf, sodass zwischen dem in Fig. 11a nicht dargestellten Gehäuse und der Außenseite des Messrohrs 10 Wasser einströmen kann. Der umlaufende Vorsprung 34 dichtet das Messrohr 10 gegenüber dem Gehäuse ab. Auch im Bereich des Einlaufs können bei Bedarf ebenfalls rippenartige Vorsprünge 35 vorgesehen sein.

Wie aus Fig. 11b hervorgeht, ist die Querschnittsform der Nebenkanäle 27a von außen nach innen zum Hauptkanal 26 erweitert, vorzugsweise im Wesentlichen trapezförmig ausgebildet. Dies hat den Vorteil, dass ein Verstopfen der Nebenkanäle 27a verhindert wird. Die Flankenflächen der Nebenkanäle besitzen in Bezug auf die Mittelsenkrechte des jeweiligen Nebenkanals 27a einen Winkel von vorzugsweise 5° bis 20°, besonders vorzugsweise 9° bis 16°. Eckbereiche im Bereich der Senken des Nebenkanals 27a sowie im Übergangsbereich des Nebenkanals 27a zum Hauptkanal 26 sind abgerundet (vorzugsweise mit einem Radius von 0,2 mm bis 0,5 mm).

Das Breiten-Höhenverhältnis der Nebenkanäle 27a ist zumindest im Wesentlichen vorzugsweise etwa 1:1.

In Fig. 11b ist mit E die Entformungsebene gezeigt, die vorzugsweise in einem Winkel α (zum Beispiel 30°) geneigt ist. Hierdurch wird erreicht, dass im Außenbereich des Messrohrs 10 keine größeren Materialanhäufungen notwendig sind, da das Messrohr 10 gut entformbar ist.

Fig. 12 zeigt die Einbausituation der vorerwähnten Ausgestaltung des Messrohrs 10 in stark vereinfachter, schematischer Darstellung. Zwischen Gehäuse 2 und Messrohr 10 ist, bedingt durch den kragenartigen, vollumlaufenden Vorsprung 34, ein Abstand zum Gehäuse 2 vorgesehen, der einen Bereich 33 bildet, in dem sich Fluid befindet. Hierdurch können akustische Reflexionen zurück in den Messkanal verhindert werden, da sich in den mit Wasser gefüllten Bereich 33 eindringende Ultraschallsignale in diesem Bereich eliminieren bzw. totlaufen.

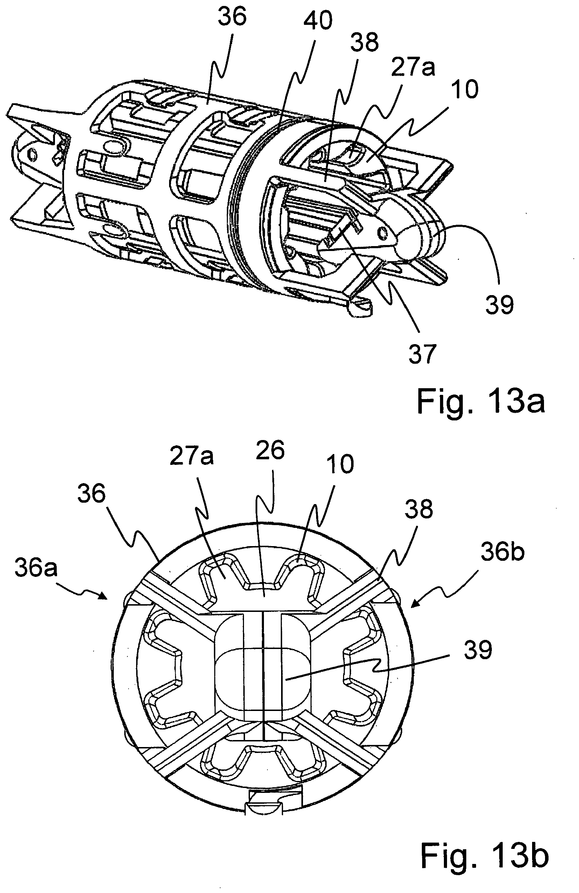

Bei der in Fig. 13a gezeigten Ausgestaltung wird das Messrohr 10 außenseitig von einem Messrohrhalter 36 umgeben. Der Messrohrhalter 36 besteht aus zwei entlang der Längsachse des Messrohrs geteilten Schalen bzw. Längsschalen 36a, 36b (vgl. Fig. 13b). Die jeweilige Längsschale 36a, 36b kann, vorzugsweise als integralen Bestandteil, Stege 38 sowie einen weiteren Bereich umfassen, wobei letzterer zusammen mit dem Bereich der gegenüberliegenden Längsschale einen Reflektorhalter 39 bilden kann, der einen Reflektor 37 trägt. Der Reflektorhalter 39 ist an seiner jeweiligen Vorderseite strömungslinienförmig ausgebildet. Der Messrohrhalter 36 sowie das Messrohr 10 sind derart zueinander positioniert, dass die Stege 38 des Messrohrhalters 36 die Nebenkanäle 27a strömungstechnisch nicht verdecken.

Im Außenbereich des Gehäuseeinsatzes 36 befindet sich eine umlaufende Nut 40 zum Einfügen einer umlaufenden (in Fig. 13a nicht dargestellten) Dichtung.

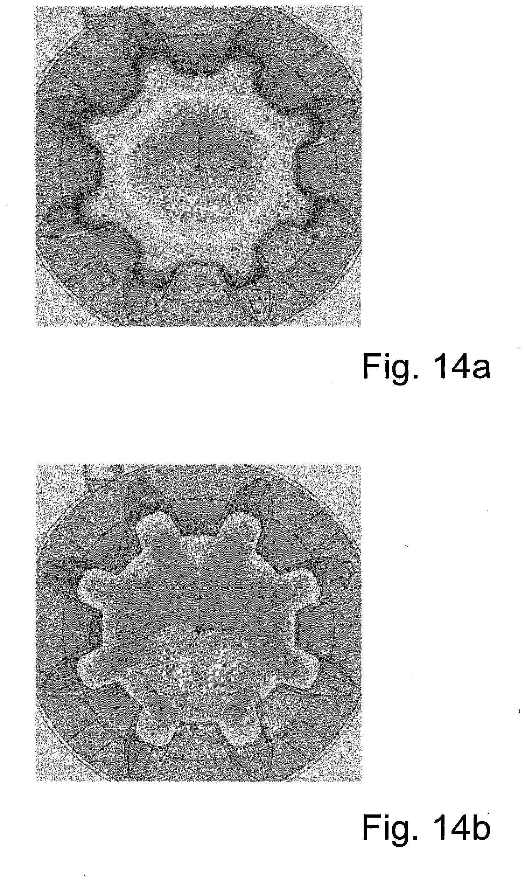

In den Fig. 14a sowie 14b ist die strömungstechnische Wirkung der vorliegenden Erfindung bildlich wiedergegeben. Fig. 14a zeigt das Strömungsprofil bei einer Strömung Q1, die geringer ist als die Strömung Q2, die in Fig. 14b dargestellt ist. Aufgrund des Vorhandenseins der Nebenkanäle bildet sich eine laminare Schichtströmung im Bereich der Nebenkanäle aus, die mit der Strömung im Hauptkanal kommuniziert. In den Nebenkanälen entsteht hierbei lediglich ein Anteil von 5-10% der Strömungsgeschwindigkeit im Vergleich zur Mitte des Hauptkanals. Dies ist einer Querschnittsverengung gleichzusetzen und erhöht die Strömung im Messrohr bzw. im Hauptkanal um bis zu 50%. Die Strömung konzentriert sich somit in Fig. 14a im Zentrum des Hauptkanals.

Bei einer hohen Strömung Q2 treten in den Nebenkanälen turbulente Strömungen auf, wodurch sich eine annähernd gleich verteilte Strömung aufbaut (vgl. Fig. 14b). Hierbei hat die Strömung in den Nebenkanälen annähernd die gleiche Geschwindigkeit (ca. 70%) wie in der Mitte des Hauptkanals und reduziert die Strömungsgeschwindigkeit und damit den Druckverlust. Als Resultat dieses hydrodynamischen Hubs kann eine höhere Messdynamik erzielt werden.

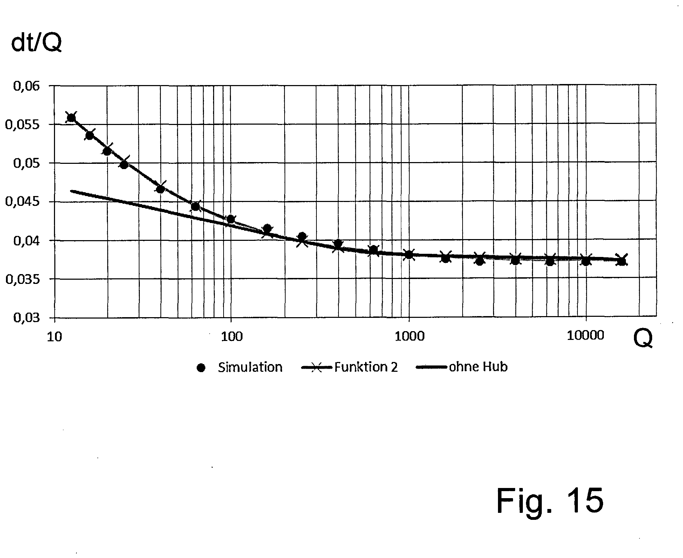

Der Effekt dieses hydrodynamischen Hubs ist sehr beachtlich und ergibt sich aus der Darstellung nach Fig. 15. In Fig. 15 ist der Messeffekt, d.h. der Quotient (Laufzeitdifferenz dt/Durchfluss Q), gegenüber dem Durchfluss Q aufgetragen. Deutlich ist der erhöhte Messeffekt bei einem Durchfluss zwischen 10 und 100 im Vergleich zu einem Messrohr mit kreisförmigem Querschnitt dargestellt. Der zusätzliche Messeffekt ermöglicht höhere Laufzeitdifferenzen bei gleichem Durchfluss. Dies bedeutet, dass bei gleicher Laufzeitdifferenz dt ein geringerer Durchfluss gemessen werden kann. Dies erhöht die Messdynamik des Durchflusszählers ganz außerordentlich.

### BEZUGSZEICHENLISTE

- 1: Ultraschallzähler
- 2: Gehäuse
- 3: Einlass
- 4: Auslass
- 5: Messeinsatz
- 6: Öffnung
- 7: Öffnung
- 8: Ultraschallwandler
- 9: Ultraschallwandler
- 10: Messrohr
- 11: Ansatz
- 12: Ansatz
- 13: reflektierende Ebene
- 14: reflektierende Ebene
- 15: Anfangsabschnitt
- 16: Endabschnitt
- 17: Zwischenbereich
- 18: Verteilerschwert
- 19: Seitenflügel
- 20: Seitenflügel
- 21: Verteilerschwert
- 22: Seitenflügel
- 23: Seitenflügel
- 24: Hauptkanal
- 25: Nebenkanal
- 26: Hauptkanal
- 27: Nebenkanal
- 27a: Nebenkanal
- 28: Nebenkanal
- 29: Wandung
- 30: Wandung
- 31: Spule
- 32: Messelektrode
- 33: Bereich
- 34: umlaufender Vorsprung
- 35: rippenartiger Vorsprung
- 36: Messrohrhalter
- 36a: Längsschale
- 36b: Längsschale
- 37: Reflektor
- 38: Steg
- 39: Reflektorhalter
- 40: Dichtungsnut

- E: Entformungsebene

## Patentansprüche

1. Durchflusszähler (1) zur Durchflussmessung von strömenden Fluiden,
wobei die Fluide über eine in einem Messrohr (10) befindliche Messstrecke fließen, die in zumindest einem Abschnitt einen Hauptkanal (24, 26) und zumindest einen Nebenkanal (25, 27, 27a, 28) aufweist, und
wobei eine Einkopplungseinrichtung (8, 9, 31) ein Messeingangssignal in das den Hauptkanal (24, 26) durchströmende Fluid einkoppelt und eine Erfassungseinrichtung (9, 8, 32) das Messeingangssignal und/oder ein aufgrund des Messeingangssignals entstehendes Messausgangssignal erfasst,
wobei für ein vorbestimmtes Fluid gilt, dass das Fluid sowohl bei einer ersten Gesamtdurchflussmenge des Fluids pro Zeit als auch bei einer zweiten Gesamtdurchflussmenge des Fluids pro Zeit, welche größer als die erste Gesamtdurchflussmenge pro Zeit ist, den Hauptkanal (24, 26) und Nebenkanäle (25, 27, 27a, 28) durchströmt, wobei das Verhältnis der Durchflussmenge pro Zeit durch alle Nebenkanäle (25) zu der Durchflussmenge pro Zeit durch den Hauptkanal (24, 26) bei der zweiten Gesamtdurchflussmenge pro Zeit größer ist als bei der ersten Gesamtdurchflussmenge pro Zeit,
wobei zumindest zwei Nebenkanäle (25, 27, 28) vorgesehen sind, die jeweils einen kleineren Querschnitt haben als der Hauptkanal (24, 26),
wobei sich eine strömungsmechanische Verschiebung der Fluidmenge ergibt derart, dass durch den Übergang in den Nebenkanälen (25, 27, 28) von laminarer zu turbulenter Strömung bei Erhöhung der Gesamtdurchflussmenge pro Zeit sich die Verteilung der Gesamtdurchflussmenge pro Zeit vom Hauptkanal (24, 26) auf die Nebenkanäle (25, 27, 28) verschiebt.

2. Durchflusszähler (1) nach Anspruch 1, **gekennzeichnet durch** zumindest 4 bis 12 Nebenkanäle (25, 27, 28), die jeweils einen kleineren Querschnitt haben als der Hauptkanal (24, 26).

3. Durchflusszähler (1) nach Anspruch 1 oder 2, **dadurch gekennzeichnet, dass** das Verhältnis der Summe der Querschnitte aller Nebenkanäle (25, 27, 28) zu dem Querschnitt des Hauptkanals (24, 26) zwischen 20 : 80 und 80 : 20 beträgt, bevorzugt zwischen 30 : 70 und 70 : 30, besonders bevorzugt zwischen 40 : 60 und 60 : 40, ganz besonders bevorzugt zwischen 45 : 55 und 55 : 45, in höchstem Maße bevorzugt im Wesentlichen 50 : 50.

4. Durchflusszähler (1) nach mindestens einem der vorhergehenden Ansprüche, **dadurch gekennzeichnet, dass** ein maximaler Durchmesser oder Wandabstand (d₁) des Hauptkanals (24, 26) zu einem minimalen Durchmesser oder Wandabstand (d₂) eines Nebenkanals (25, 27, 28) im Verhältnis von zwischen 2,5 und 6, bevorzugt von zwischen 4 und 5 steht.

5. Durchflusszähler (1) nach mindestens einem der vorhergehenden Ansprüche, **dadurch gekennzeichnet, dass** zumindest ein erster Teil der Nebenkanäle (25, 28) durch eine Wandung (29) von dem Hauptkanal (24, 26) getrennt ist, wobei insbesondere vorgesehen ist, **dass** die Wandung (29), die den ersten Teil der Nebenkanäle (25, 28) von dem Hauptkanal trennt, entlang eines Teils der gesamten Messstrecke vorhanden ist und dass Wandungen (30), die die Nebenkanäle (25; 28) des ersten Teils der Nebenkanäle (25, 28) voneinander trennen, in einem Anfangsabschnitt (15) und einem Endabschnitt (16) des Teils der Messstrecke vorgesehen sind, aber in einem Zwischenbereich (17) entfallen, wobei der Anfangsabschnitt (15) und der Endabschnitt (16) vorzugsweise eine Länge (lₐ, l_{b}) haben, die mindestens das 1,5- bis 2-fache der kleinsten Querschnittsabmessung (d₂) des Querschnitts eines Nebenkanals (25, 28) beträgt.

6. Durchflusszähler (1) nach mindestens einem der vorhergehenden Ansprüche, **dadurch gekennzeichnet, dass** zumindest ein zweiter Teil der Nebenkanäle (27) oder alle Nebenkanäle (27) als sich an den Hauptkanal (26) anschließender Radialspalt oder als Ausbuchtung aus dem Hauptkanal (26) ausgebildet ist bzw. sind.

7. Durchflusszähler (1) nach mindestens einem der vorhergehenden Ansprüche, **dadurch gekennzeichnet, dass** sich die Querschnittsform der Nebenkanäle (27a) von außen nach innen zum Hauptkanal (26) hin erweitert, vorzugsweise im Wesentlichen trapezförmig ausgebildet ist.

8. Durchflusszähler (1) nach mindestens einem der vorhergehenden Ansprüche, **dadurch gekennzeichnet, dass** der Hauptkanal (24, 26) in zwei vorbestimmten zueinander senkrechten Richtungen im Wesentlichen die gleiche Abmessung (d₁) aufweist, wobei vorzugsweise der Hauptkanal (24, 26) einen kreisförmigen oder quadratischen Querschnitt aufweist, wobei insbesondere vorgesehen ist, **dass** der Hauptkanal (24, 26) zu einer Achse des Durchflusszählers ringsymmetrisch angeordnet ist und die Nebenkanäle (25, 27, 28) ringförmig um den Hauptkanal (24, 26) verteilt sind.

9. Durchflusszähler (1) nach mindestens einem der vorhergehenden Ansprüche, **dadurch gekennzeichnet, dass** zumindest ein Teil der Nebenkanäle (25, 27, 28) in zwei verschiedenen Richtungen unterschiedliche Abmessungen aufweist, wobei vorzugsweise ein Nebenkanal (27, 28) einen nicht-quadratischen, aber im Wesentlichen rechteck- oder trapezförmigen Querschnitt aufweist.

10. Durchflusszähler (1) nach mindestens einem der vorhergehenden Ansprüche, **dadurch gekennzeichnet, dass** zumindest ein Teil der Nebenkanäle (25) einen ringsegmentförmigen Querschnitt aufweist.

11. Durchflusszähler (1) nach mindestens einem der vorhergehenden Ansprüche, **dadurch gekennzeichnet, dass** ein Paar von Ultraschallwandlern (8, 9) beide die Funktion der Einkopplungseinrichtung und der Erfassungseinrichtung bereitstellen, wobei vorzugsweise vorgesehen ist, **dass** ein Teil der Messstrecke zumindest abschnittsweise durch einen Rohreinschub (10) bereitgestellt ist, der zwei Ansätze (11, 12) mit jeweils einer Ultraschall reflektierenden Oberfläche (13, 14) aufweist, welche Ultraschall von den Wandlern (8, 9) in den Hauptkanal (24) hineinlenken.

12. Durchflusszähler (1) nach mindestens einem der Ansprüche 1-10, **dadurch gekennzeichnet, dass** eine ein Magnetfeld erzeugende elektrische Spule die Einkoppeleinrichtung darstellt und eine Elektrodenanordnung die Erfassungseinrichtung darstellt.

13. Durchflusszähler (1) nach mindestens einem der vorhergehenden Ansprüche, **gekennzeichnet durch** einen Filter für Partikel, der als Sieb im Einlauf ausgebildet ist, dessen Öffnungen kleiner sind als oder gleich groß wie die kleinsten Querschnittsabmessungen der Nebenkanäle (25, 27, 28).

14. Durchflusszähler (1) nach mindestens einem der vorhergehenden Ansprüche, **dadurch gekennzeichnet, dass** sich die Nebenkanäle (27, 28) zumindest im Wesentlichen über die gesamte Länge des Hauptkanals (26) erstrecken.

15. Durchflusszähler (1) nach mindestens einem der vorhergehenden Ansprüche, **dadurch gekennzeichnet, dass** der Hauptkanal (24, 26) sowie die Nebenkanäle (25, 27, 28) als einteiliges, insbesondere als in seiner Längsrichtung konisch geformtes, Bauteil, vorzugsweise als einteiliges Formteil, besonders vorzugsweise als einteiliges Spritzgussteil ausgebildet ist, wobei insbesondere vorgesehen ist, **dass** die Entformungsebene E, vorzugsweise mittig, durch zwei gegenüberliegende Nebenkanäle (27a) verläuft.

16. Durchflusszähler (1) nach mindestens einem der vorhergehenden Ansprüche, **dadurch gekennzeichnet, dass** der Durchflusszähler (1) ein Gehäuse (2) mit einer Innenwand aufweist und sich in einem Bereich (33) zwischen der Innenwand des Gehäuses (2) und einer Außenwand des den Hauptkanal (26) sowie die Nebenkanäle (27a) umfassenden Messrohrs (10) Fluid befindet, wobei vorzugsweis vorgesehen ist, **dass** an der Rückseite des Messrohrs (10) ein umlaufender kragenartiger Vorsprung (34) zum Gehäuseanschluss vorgesehen ist.

17. Durchflusszähler (1) nach mindestens einem der vorhergehenden Ansprüche, **dadurch gekennzeichnet, dass** das Messrohr (10) von einem Messrohrhalter (36) umgeben ist, wobei der Messrohrhalter (36) mindestens zwei Längsschalen (36a, 36b) umfasst, die das Messrohr (10) sowie die Reflektoren (37) fixieren, wobei vorzugsweise vorgesehen ist, **dass** der Messrohrhalter (36) mindestens einen Steg (38) aufweist, der so angeordnet ist, dass er den mindestens einen Nebenkanal (25, 27, 27a, 28) strömungstechnisch nicht verdeckt.

## Claims

1. Flow meter (1) for flow measurement of flowing fluids,
wherein the fluids flow over a measurement path which is situated in a measurement tube (10) and which, in at least one section, has a main channel (24, 26) and at least one secondary channel (25, 27, 27a, 28), and
wherein an input coupling device (8, 9, 31) couples a measurement input signal into the fluid flowing through the main channel (24, 26) and a detection device (9, 8, 32) detects the measurement input signal and/or a measurement output signal which arises on account of the measurement input signal,
wherein, for a predetermined fluid, it is the case that the fluid flows through the main channel (24, 26) and secondary channels (25, 27, 27a, 28) both with a first total flow quantity of the fluid per unit time and with a second total flow quantity of the fluid per unit time, which is greater than the first total flow quantity per unit time, wherein the ratio of the flow quantity per unit time through all the secondary channels (25) to the flow quantity per unit time through the main channel (24, 26) is greater for the second total flow quantity per unit time than for the first total flow quantity per unit time,
wherein provision is made of at least two secondary channels (25, 27, 28) which in each case have a smaller cross section than the main channel (24, 26),
wherein a fluid-mechanical displacement of the fluid quantity is realized in such a manner that, as a result of the transition in the secondary channels (25, 27, 28) from laminar to turbulent flow when the total flow quantity per unit time is increased, the distribution of the total flow quantity per unit time is displaced from the main channel (24, 26) to the secondary channels (25, 27, 28).

2. Flow meter (1) according to Claim 1, **characterized by** at least 4 to 12 secondary channels (25, 27, 28), each of which has a smaller cross section than the main channel (24, 26).

3. Flow meter (1) according to Claim 1 or 2, **characterized in that** the ratio of the sum of the cross sections of all the secondary channels (25, 27, 28) to the cross section of the main channel (24, 26) is between 20:80 and 80:20, preferably between 30:70 and 70:30, particularly preferably between 40:60 and 60:40, very particularly preferably between 45:55 and 55:45, most preferably substantially 50:50.

4. Flow meter (1) according to at least one of the preceding claims, **characterized in that** a maximum diameter or wall distance (d₁) of the main channel (24, 26) is in a ratio of between 2.5 and 6, preferably between 4 and 5, with respect to a minimum diameter or wall distance (d₂) of a secondary channel (25, 27, 28).

5. Flow meter (1) according to at least one of the preceding claims, **characterized in that** at least a first portion of the secondary channels (25, 28) is separated from the main channel (24, 26) by a wall (29), wherein it is provided in particular **that** the wall (29) which separates the first portion of the secondary channels (25, 28) from the main channel is present along a part of the total measurement path, and **in that** walls (30) which separate the secondary channels (25, 28) of the first portion of the secondary channels (25, 28) from one another are provided in a start section (15) and an end section (16) of the part of the measurement path but are absent in an intermediate region (17), wherein the start section (15) and the end section (16) preferably have a length (lₐ, l_{b}) which is at least 1.5 to 2 times the smallest cross-sectional dimension (d₂) of the cross section of a secondary channel (25, 28).

6. Flow meter (1) according to at least one of the preceding claims, **characterized in that** at least a second portion of the secondary channels (27) or all the secondary channels (27) are formed as a radial gap adjoining the main channel (26) or as a bulge from the main channel (26).

7. Flow meter (1) according to at least one of the preceding claims, **characterized in that** the cross-sectional shape of the secondary channels (27a) widens towards the main channel (26) from the outside to the inside, preferably is of substantially trapeziform form.

8. Flow meter (1) according to at least one of the preceding claims, **characterized in that** the main channel (24, 26) has substantially the same dimension (d₁) in two predetermined mutually perpendicular directions, wherein preferably the main channel (24, 26) has a circular or square cross section, wherein it is provided in particular **that** the main channel (24, 26) is arranged in an annularly symmetrical manner in relation to an axis of the flow meter and the secondary channels (25, 27, 28) are distributed annularly around the main channel (24, 26) .

9. Flow meter (1) according to at least one of the preceding claims, **characterized in that** at least a portion of the secondary channels (25, 27, 28) have different dimensions in two different directions, wherein preferably a secondary channel (27, 28) has a non-square but substantially rectangular or trapeziform cross section.

10. Flow meter (1) according to at least one of the preceding claims, **characterized in that** at least a portion of the secondary channels (25) have a ring-segment-shaped cross section.

11. Flow meter (1) according to at least one of the preceding claims, **characterized in that** a pair of ultrasonic transducers (8, 9) both provide the function of the input coupling device and of the detection device, wherein it is preferably provided **that** a part of the measurement path is provided at least sectionally by a tube insert (10) having two attachments (11, 12) with in each case one ultrasound-reflecting surface (13, 14), these directing ultrasound from the transducers (8, 9) into the main channel (24).

12. Flow meter (1) according to at least one of Claims 1-10, **characterized in that** an electrical coil which generates a magnetic field constitutes the input coupling device, and an electrode arrangement constitutes the detection device.

13. Flow meter (1) according to at least one of preceding claims, **characterized by** a filter for particles that is formed as a screen in the entry, the openings of which filter are smaller than or the same size as the smallest cross-sectional dimensions of the secondary channels (25, 27, 28).

14. Flow meter (1) according to at least one of preceding claims, **characterized in that** the secondary channels (27, 28) extend at least substantially over the entire length of the main channel (26).

15. Flow meter (1) according to at least one of preceding claims, **characterized in that** the main channel (24, 26) and the secondary channels (25, 27, 28) are formed as a one-part component, in particular as a component of conical shape in its longitudinal direction, preferably as a one-part moulded part, particularly preferably as a one-part injection-moulded part, wherein it is provided in particular **that** the mould release plane E extends, preferably centrally, through two oppositely situated secondary channels (27a).

16. Flow meter (1) according to at least one of preceding claims, **characterized in that** the flow meter (1) has a housing (2) with an inner wall, and fluid is situated in a region (33) between the inner wall of the housing (2) and an outer wall of the measurement tube (10) comprising the main channel (26) and the secondary channels (27a), wherein it is preferably provided **that** an encircling collar-like projection (34) for connection to the housing is provided on the rear side of the measurement tube (10).

17. Flow meter (1) according to at least one of preceding claims, **characterized in that** the measurement tube (10) is surrounded by a measurement tube holder (36), wherein the measurement tube holder (36) comprises at least two longitudinal shells (36a, 36b), which fix the measurement tube (10) as well as the reflectors (37), wherein it is preferably provided **that** the measurement tube holder (36) has at least one web (38) which is arranged in such a way that, in terms of flow, it does not cover the at least one secondary channel (25, 27, 27a, 28).

## Revendications

1. Débitmètre (1) pour la mesure du débit de fluides en écoulement,
les fluides s'écoulant sur un parcours de mesure se trouvant dans un tube de mesure (10), qui présente dans au moins une section un canal principal (24, 26) et au moins un canal auxiliaire (25, 27, 27a, 28), et
un dispositif de couplage (8, 9, 31) couplant un signal d'entrée de mesure dans le fluide s'écoulant dans le canal principal (24, 26) et un dispositif de détection (9, 8, 32) détectant le signal d'entrée de mesure et/ou un signal de sortie de mesure produit sur la base du signal d'entrée de mesure,
pour un fluide prédéterminé, le fluide s'écoulant à la fois à un premier débit total du fluide par temps et à un deuxième débit total du fluide par temps, qui est supérieur au premier débit total par temps, dans le canal principal (24, 26) et les canaux auxiliaires (25, 27, 27a, 28), le rapport entre le débit par temps à travers tous les canaux auxiliaires (25) et le débit par temps à travers le canal principal (24, 26) au deuxième débit total par temps étant supérieur à celui au premier débit total par temps,
au moins deux canaux auxiliaires (25, 27, 28) étant prévus, qui ont chacun une section transversale plus petite que le canal principal (24, 26),
un déplacement mécanique d'écoulement de la quantité de fluide se produisant de telle sorte que, par le passage dans les canaux auxiliaires (25, 27, 28) d'un écoulement laminaire à un écoulement turbulent lors de l'augmentation du débit total par temps, la répartition du débit total par temps se déplace du canal principal (24, 26) vers les canaux auxiliaires (25, 27, 28).

2. Débitmètre (1) selon la revendication 1, **caractérisé par** au moins 4 à 12 canaux auxiliaires (25, 27, 28), qui ont chacun une section transversale plus petite que le canal principal (24, 26).

3. Débitmètre (1) selon la revendication 1 ou 2, **caractérisé en ce que** le rapport entre la somme des sections transversales de tous les canaux auxiliaires (25, 27, 28) et la section transversale du canal principal (24, 26) est compris entre 20:80 et 80:20, de préférence entre 30:70 et 70:30, de manière particulièrement préférée entre 40:60 et 60:40, de manière tout particulièrement préférée entre 45:55 et 55:45, de manière préférée en la plus haute mesure d'essentiellement 50:50.

4. Débitmètre (1) selon au moins l'une quelconque des revendications précédentes, **caractérisé en ce qu'**un diamètre ou écart des parois maximum (d₁) du canal principal (24, 26) sur un diamètre ou écart des parois minimum (d₂) d'un canal auxiliaire (25, 27, 28) en rapport est compris entre 2,5 et 6, de préférence entre 4 et 5.

5. Débitmètre (1) selon au moins l'une quelconque des revendications précédentes, **caractérisé en ce qu'**au moins une première partie des canaux auxiliaires (25, 28) est séparée du canal principal (24, 26) par une paroi (29), il étant notamment prévu **que** la paroi (29) qui sépare la première partie des canaux auxiliaires (25, 28) du canal principal est présente le long d'une partie de l'ensemble du parcours de mesure et **en ce que** des parois (30) qui séparent les canaux auxiliaires (25 ; 28) de la première partie des canaux auxiliaires (25, 28) les uns des autres sont prévues dans une section initiale (15) et une section finale (16) de la partie du parcours de mesure, mais sont supprimées dans une zone intermédiaire (17), la section initiale (15) et la section finale (16) ayant de préférence une longueur (lₐ, l_{b}) qui est d'au moins 1,5 à 2 fois la plus petite dimension de section transversale (d₂) de la section transversale d'un canal auxiliaire (25, 28).

6. Débitmètre (1) selon au moins l'une quelconque des revendications précédentes, **caractérisé en ce qu**'au moins une deuxième partie des canaux auxiliaires (27) ou tous les canaux auxiliaires (27) sont configurés sous forme de fente radiale se raccordant au canal principal (26) ou sous forme d'échancrure du canal principal (26).

7. Débitmètre (1) selon au moins l'une quelconque des revendications précédentes, **caractérisé en ce que** la forme de section transversale des canaux auxiliaires (27a) s'élargit de l'extérieur vers l'intérieur vers le canal principal (26), de préférence est configurée essentiellement sous forme trapézoïdale.

8. Débitmètre (1) selon au moins l'une quelconque des revendications précédentes, **caractérisé en ce que** le canal principal (24, 26) présente essentiellement la même dimension (d₁) dans deux directions prédéterminées perpendiculaires entre elles, le canal principal (24, 26) présentant de préférence une section transversale circulaire ou carrée, il étant notamment prévu **que** le canal principal (24, 26) est agencé selon une symétrie annulaire par rapport à un axe du débitmètre et les canaux auxiliaires (25, 27, 28) sont répartis de manière annulaire autour du canal principal (24, 26).

9. Débitmètre (1) selon au moins l'une quelconque des revendications précédentes, **caractérisé en ce qu'**au moins une partie des canaux auxiliaires (25, 27, 28) présente des dimensions différentes dans deux directions différentes, un canal auxiliaire (27, 28) présentant de préférence une section transversale non carrée, mais essentiellement rectangulaire ou trapézoïdale.

10. Débitmètre (1) selon au moins l'une quelconque des revendications précédentes, **caractérisé en ce qu'**au moins une partie des canaux auxiliaires (25) présente une section transversale en forme de segment d'anneau.

11. Débitmètre (1) selon au moins l'une quelconque des revendications précédentes, **caractérisé en ce qu'**une paire de transducteurs ultrasonores (8, 9) assurent tous les deux la fonction du dispositif de couplage et du dispositif de détection, il étant de préférence prévu **qu'**une partie du parcours de mesure est assurée, au moins par sections, par un insert tubulaire (10) qui présente deux prolongements (11, 12) ayant chacun une surface réfléchissant les ultrasons (13, 14) qui dirige les ultrasons des transducteurs (8, 9) dans le canal principal (24).

12. Débitmètre (1) selon au moins l'une quelconque des revendications 1 à 10, **caractérisé en ce qu'**une bobine électrique générant un champ magnétique constitue le dispositif de couplage et un agencement d'électrodes constitue le dispositif de détection.

13. Débitmètre (1) selon au moins l'une quelconque des revendications précédentes, **caractérisé par** un filtre pour particules, qui est configuré sous forme de tamis dans l'entrée, dont les ouvertures sont inférieures ou égales aux plus petites dimensions de section transversale des canaux auxiliaires (25, 27, 28).

14. Débitmètre (1) selon au moins l'une quelconque des revendications précédentes, **caractérisé en ce que** les canaux auxiliaires (27, 28) s'étendent au moins essentiellement sur toute la longueur du canal principal (26) .

15. Débitmètre (1) selon au moins l'une quelconque des revendications précédentes, **caractérisé en ce que** le canal principal (24, 26) ainsi que les canaux auxiliaires (25, 27, 28) sont configurés sous la forme d'un composant d'une seule pièce, notamment de forme conique dans sa direction longitudinale, de préférence sous la forme d'une pièce moulée d'une seule pièce, de manière particulièrement préférée sous la forme d'une pièce moulée par injection d'une seule pièce, il étant notamment prévu **que** le plan de démoulage E s'étend, de préférence au milieu, à travers deux canaux auxiliaires (27a) opposés.

16. Débitmètre (1) selon au moins l'une quelconque des revendications précédentes, **caractérisé en ce que** le débitmètre (1) présente un boîtier (2) avec une paroi intérieure et se trouve dans une zone (33) entre la paroi intérieure du boîtier (2) et une paroi extérieure du tube de mesure (10) comprenant le canal principal (26) et les canaux auxiliaires (27a), il étant de préférence prévu **qu'**une saillie périphérique en forme de collerette (34) est prévue sur le côté arrière du tube de mesure (10) pour le raccordement au boîtier.

17. Débitmètre (1) selon au moins l'une quelconque des revendications précédentes, **caractérisé en ce que** le tube de mesure (10) est entouré par un support de tube de mesure (36), le support de tube de mesure (36) comprenant au moins deux coques longitudinales (36a, 36b), qui fixent le tube de mesure (10) ainsi que les réflecteurs (37), il étant de préférence prévu **que** le support de tube de mesure (36) présente au moins une entretoise (38) qui est agencée de telle sorte qu'elle ne recouvre pas l'au moins un canal auxiliaire (25, 27, 27a, 28) du point de vue de l'écoulement.
